Europäisches Patentamt

**European Patent Office**

Office européen des brevets

(19)

(11) Publication number: **0 016 586**

**A1**

(12) # EUROPEAN PATENT APPLICATION

(21) Application number: **80300679.0**

(22) Date of filing: **06.03.80**

(51) Int. Cl.³: **G 06 F 13/00**
**G 06 F 9/46**

(30) Priority: **07.03.79 JP 26865/79**

(43) Date of publication of application:
**01.10.80 Bulletin 80/20**

(84) Designated Contracting States:
**DE FR GB**

(71) Applicant: **Hitachi, Ltd.**
**5-1, Marunouchi 1-chome**
**Chiyoda-ku Tokyo 100(JP)**

(72) Inventor: **Nakane, Keiichi**
**22-8 Honcho-4-chome**
**Kokubunki-shi(JP)**

(72) Inventor: **Kamuichi, Toshiro**
**540-40, Josuiminamimachi**
**Kodaira-shi(JP)**

(72) Inventor: **Hayashi, Keijiro**
**14-C102, Sukegawacho-5-chome**
**Hitachi-shi(JP)**

(74) Representative: **Ellis, Edward Lovell et al,**
**MEWBURN ELLIS & CO. 70-72, Chancery Lane**
**London, WC2A 1AD(GB)**

(54) **Data processing system with multiple logical space.**

(57) A data processing system comprises a main memory (100), a logical space number storage (480) for storing logical space numbers, a logical address storage (400) for storing logical addresses, address converter (600) for producing physical addresses in response to the logical space numbers and logical addresses to access the main memory. The logical space number storage (480) includes two storages (OPM1, OPM2) for storing logical space numbers to be used in a data access and a storage (ISM) for storing a logical space number to be used in an instruction access, thereby to reduce the time required for the switching between logical space numbers at the data processing.

./...

F I G. 1

- 1 -

DATA PROCESSING SYSTEM

This invention relates to a data processing system utilizing a multiple logical space and more particularly to a data processing system of the type which makes use of a logical space exclusively used for an operating system or a program which manages to control the data processing system.

Rapid technical development in the field of computer memories in recent years contributes to progressive improvements in computer technology with a trend involved to an increased main memory capacity. It is general practice to incorporate an address conversion unit in such an improved computer so as to make conventional programs adaptive thereto. Assuming an address for accessing a conventional memory generated according to a conventional program as a logical address, the address conversion unit converts the logical address along with a logical space number into an address for accessing a new memory or a physical address. The logical space is a space defined by the logical address, and one of a plurality of logical spaces is allotted to each program or each data. The plurality of logical spaces are mapped by means of the address conversion unit onto different regions on a memory.

Conventionally, in such a computer, a program which manages to control the execution of a user program,

that is, an operating system (hereinafter simply referred to as OS) is allotted with the same logical space as that for the user program. In other words, each logical space is divided into two regions, one region being for the OS and the other being for the user program. Recently, the controlling technique in computers has been highly advanced, and the OS has become complicated more and more and its capacity has been increasing. Accordingly, within one logical space, a region allotted to the OS is increased whereas a region available for the user program is inevitably decreased. As a result, it is difficult to incorporate a large capacity user program in one logical space. According to an approach to solve this problem, one logical space is exclusively allotted to the OS (see Japanese Patent Application Laid-open No. 57929/ 1978, for example). However, when the OS and the user program are allotted to different logical spaces, the processing for switching over the logical spaces becomes complicated, resulting in prolonged processing time. For example, let us consider a processing wherein a task program within the user program requests the OS to process a data which is related to the task program and which is contained in the same logical space as the task program. The OS first uses a logical space number for the task program requiring the processing in order to read out the data to be processed. Subsequently, when the OS needs a data contained in a logical space allotted to the OS for the sake of processing the data to be processed, it uses a logical space number for the OS. At the termination of the processing, the logical space number for the task program is again used for storing the processed data into a predetermined region of a memory. In this way, even when one data processing is requested, one logical space number for the task program, one logical space number for the OS and the logical space number for the original task program are sequentially used. Consequently, with a single register for storing the logical space number, there needs a processing wherein the logical space number for the task program is first stored in this register, contents of this original register are then saved in a separate register, the logical space number for the OS is now set in the original register and finally, the logical space number saved in the separate register is restored to the original register. This lengthy processing disadvantageously prolongs the processing time as compared to the conventional processing without the logical space exclusively used for the OS.

The present invention intends to eliminate the prior art disadvantages and has for its object to provide a data processing system which can reduce time for switchover between logical space numbers upon processing data.

To accomplish the above object, a data processing system according to the invention comprises first means for storing logical space numbers used for accessing machine instructions, second and third means for storing logical space numbers used for accessing data, and means for selecting the first, second or third means as desired. Upon accessing the data, selective switchover is effected between the second and third means so that the frequency of the processing for saving or restoring the logical space number can be reduced.

Fig. 1 is a block diagram of a computer according to this invention;

Fig. 2 is a diagrammatic representation to show a correspondence between logical spaces and a main memory;

Figs. 3a and 3b illustrate in sections flow charts useful to explain the operation of the computer of Fig. 1; and

Fig. 4 is a diagrammatic representation to show another correspondence between logical spaces and a main memory for use in the computer of Fig. 1.

The invention will now be described by way of examples by referring to the accompanying drawings.

(a) Construction of System

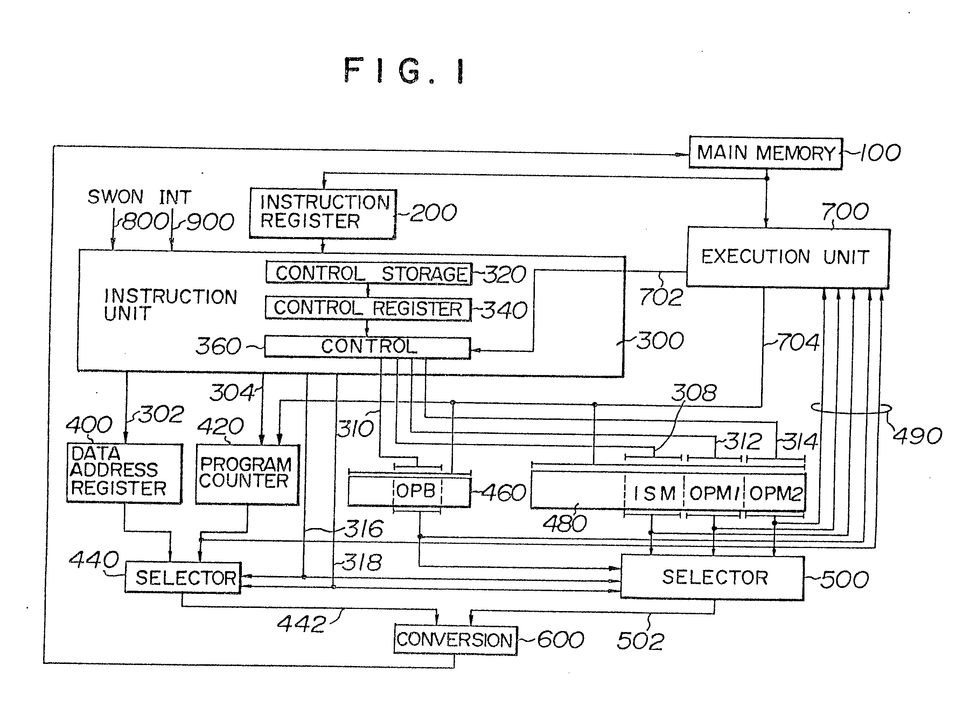

Referring to Fig. 1, there is shown in the block form main components of a computer according to the invention. A main memory (hereinafter referred to as MM) 100 for storing machine instructions (hereinafter referred to as instructions), an instruction register 200 for storing an instruction, most part of an instruction unit (hereinafter referred to as I unit) 300 for controlling the execution of the instructions, an execution unit (hereinafter referred to as E unit) 700, a data address register (hereinafter referred to as DAR) 400, and a program counter (hereinafter referred to as PC) 420 are the same as in the prior art. The I unit 300, however, includes a control circuit 360 which is specific to the present invention. A selector 440 selects the DAR 400 and the PC 420 in response to an instruction access timing signal and a data access timing signal, respectively, which are fed via lines 316 and 318. A known address conversion circuit 600 converts a logical space number (hereinafter referred to as LS number) and a logical address which is respectively fed via lines 502 and 442 into a physical address which in turn is used to access the MM 100. Of component parts illustrated in Fig. 1, the following components are specific to the present invention:

(i)    a relocation register (hereinafter referred to as RCR) 480 having three fields of 4 bits for respectively storing an LS number ISM used to access an instruction and LS numbers OPM1 and OPM2 both used to access a data;

(ii)    a status register (hereinafter referred to as STR) 460 adapted to store a designation bit OPB which is used, upon access of a certain data, to selectively designate the LS numbers OPM1 and OPM2 for enabling either one of them to participate in accessing this data;

(iii') a selector 500 being responsive to the designation bit OPB and timing signals on lines 316 and 318 to select, when accessing an instruction, the LS number ISM and when accessing a data, to select the LS number OPM1 if the designation bit OPB is "0" and the LS number OPM2 if the designation bit OPB is "1"; and

(iv) as mentioned above, the control circuit 360 incorporated in the I unit 300.

The control circuit 360 serves in a known manner to control various circuits in the computer by receiving and decoding a microinstruction fed from a control storage 320 via a control register 340 and to decide a microinstruction address to be executed subsequently in response to various operating signals within the computer but it serves in a manner specific to the invention to produce, in response to microinstructions, on lines 310, 308, 312 and 314 signals for relocating contents of the OPB field in the STR 460 and contents of each of the ISM, OPM1 and OPM2 fields in the RCR 480.

According to the invention, the switchover between LS numbers is advantageously effected by using such data as the designation bit OPB and the LS numbers ISM, OPM1 and OPM2 generally called herein in this embodiment "space switchover data". The STR 460 and RCR 480 also have the other fields than the above ones, for storage of data which are used to control the execution of programs. Thus, the remaining fields not directly related to the present invention will not be detailed herein. In the following description, contents of each of the PC 420, STR 460 and RCR 480 will simply be referred to as program status word or PSW.

In the computer, to carry out the execution of an instruction, the instruction is set in the I unit 300, and microinstructions for executing this instruction are read out sequentially in response thereto by the control register 340 from the control storage 320 and decoded by the control circuit 360. It is a must that the sequence of the microinstructions within the control storage 320 be so constructed as to accomplish an operation to be described later. However, it should be understood that the preparation of such a microinstruction sequence and the construction of the control circuit 360 may easily be achieved by those skilled in the art in the light of teachings of the present invention.

The system as shown in Fig. 1 can be applicable not only to an OS which is fully modified to be adaptive to a computer having a logical space used exclusively for the OS but also to an OS which is partly directed to a conventional computer not having a logical space used exclusively for the OS and hence has a portion which is not modified to be adaptive to a computer having a logical space used exclusively for the OS. The operation of the computer will then be described in accordance with the two types of OS.

- 8 -

(b)  Operation (for an OS with an unmodified portion)

(i)  Correspondence between Logical Spaces and the
Main Memory

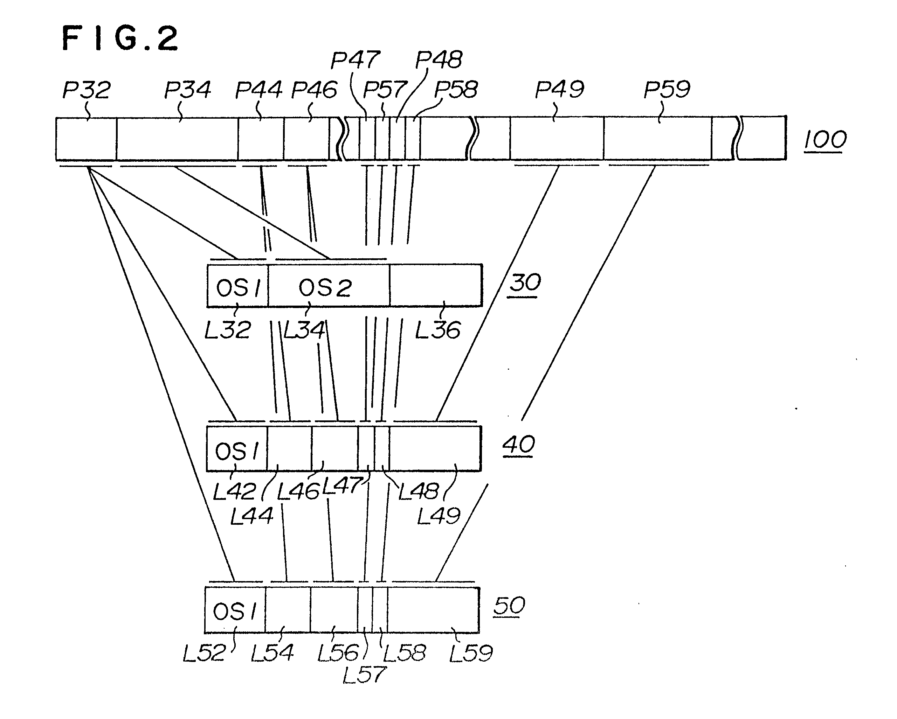

The correspondence of regions in logical spaces with those in main memory is illustrated in Fig. 2 . for the case wherein an OS with an unmodified portion is used in the computer of Fig. 1.  Logical spaces as designated by reference numerals 30, 40 and 50 have each a maximum word capacity of 64K which is prescribed by 16 bits.  The logical space 30 is exclusively used for the OS and has a region L32 for an unmodified portion OS1, a regoin L34 for a portion OS2 which is provided by modification for the logical space exclusively used for the OS, and a spare region L36.  The regions L32 and L34 are bounded by the lowermost address in region L34 which is called hereinafter a fence address.  The logical spaces 40 and 50 are provided for the unmodified portion OS1 and a user program.  Logical spaces of this type are 15 in number in this embodiment, of which two designated by 40 and 50 are illustrated.  Regions L42 and L52 having the same capacity as the region L32 are for the unmodified portion OS1.  Regions L44 and L54 of the same capacity are for the same subroutine.  Regions L46 and L56 of the same capacity are for the same data. Regoins L47 and L57 are for data which are specific to the logical spaces 40 and 50, respectively.  Regions L48 and L58 are for subroutines which are specific to the logical spaces 40 and 50.  And, regions L49 and L59 are for task programs which are specific to the logical spaces 40 and 50.

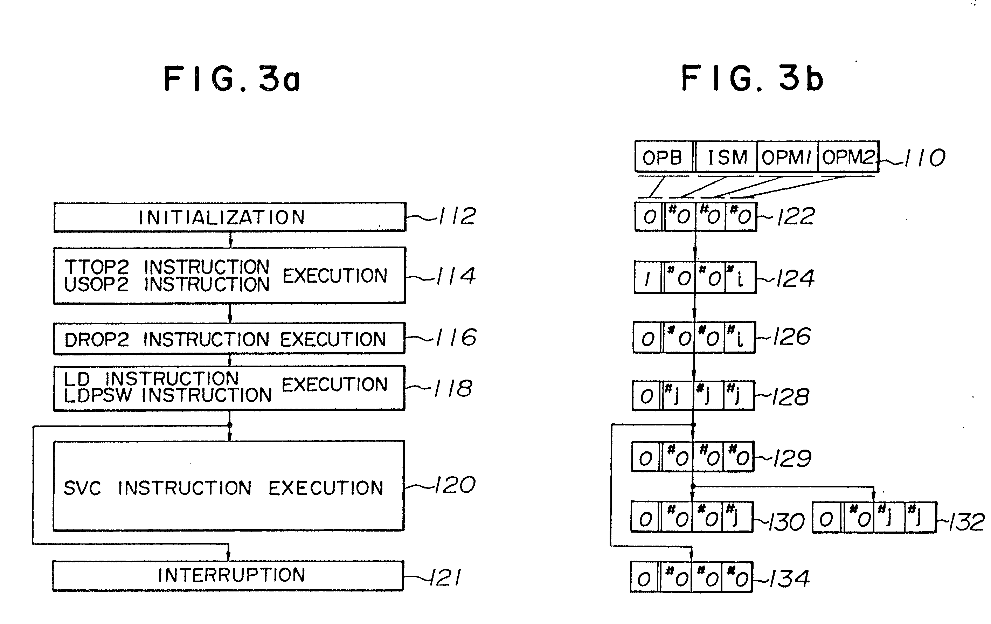

These regions are mapped onto predetermined regions in the MM 100 by means of the address conversion unit 600. In particular, the regions L32, L42 and L52 are all mapped onto a region P32 and the region L34 onto a region P34. The regions L44 and L54 are both mapped onto a region P44 and both the regions L46 and L56 onto a region P46. The regions L47, L48, L49, L57, L58 and L59 are mapped onto regions P47, P48, P49, P57, P58 and P59, respectively. Logical space numbers of the logical spaces 30, 40 and 50 will be termed "#0", "#i" and "#j", respectively, in the following description. Reference is now made to Figs. 3a and 3b, which show in section an operational flow and in section a flow of change in the space switchover data, to give an operational description of the system.

(ii)  Initialization

When a computer start switch (not shown) is turned on, a start signal SWON is fed to the I unit 300 via a line 800 as shown in Fig. 1. A known circuit (not shown) in the I unit 300 generates in response to the start signal a logical address for a predetermined table within the MM 100 which stores the heading address of an initializing routine in the modified portion OS2 and sends it to the DAR 400 via a line 302. The logical address is stored in the DAR 400. On the other hand, the control storage 320 in the I unit 300 causes, in

response to the signal SWON, an initializing microprogram routine to start so that microinstructions are sequentially sent to the control circuit 360. This circuit 360 then sets the LS numbers ISM, OPM1 and OPM2 within the RCR 480 to "#0" with concurrent setting of the designation bit OPB within the STR to "0". Consequently, the space switchover data shown at 110 in Fig. 3 has a value as shown at 122 at the termination of initialization (block 112 in Fig. 3).

Thereafter, the control circuit 360 decodes the microinstructions and sends a data access timing signal on line 318. This timing signal gives the timing for accessing data in the MM 100. The selector 440 selects the DAR 400 in response to the timing signal. Depending on the designation bit OPB of "0" and responsive to the data access timing signal on line 318, the selector 500 selects the LS number OPM1 and sends "#0". The address conversion unit 600 responds to the table address and the LS number of "#0" fed via lines 442 and 502, respectively, to produce a physical address of 20 bits for reading out the aforementioned table within the MM 100. The MM 100 is accessed on the basis of this physical address. Thereafter, an address in the aforementioned table within the MM 100 which is representative of the heading address in the initialization routine within the modified portion OS2 is sent to the I. 420 via the E unit and a line 704.

(iii)  Execution of OS

When an instruction corresponding to the address stored in the PC 420 is read out from the MM 100, the control circuit 360 sends an instruction.access timing signal on line 316.  The selector 440 responds to this signal to select the PC 420.  On the other hand, the selector 500 responds to the timing signal on line 316 to select the LS number ISM in the RCR 480, thereby producing an output of "#0".  The address conversion unit 600, which is receiving the LS number of "#0" fed via line 502, produces a physical address for the region P32 in the MM 100 when the instruction address fed via line 442 is for the region L32, or a physical address for the region P34 when the instruction address is for the region L34 so that the corresponding instruction is read out from the MM 100.  This read out instruction is set into the instruction register 200 and executed under the control of the I unit 300. Thereafter, the I unit 300 renews the PC 420 through line 304 in a known manner and the subsequent instruction is read out and executed.

When it is desired to access data in the unmodified region OS1 and modified region OS2 during execution of the instructions in these regions, the I unit 300 responds to a data address field of the instructions stored in the instruction register 200 so as to calculate a data address which in turn is set into the DAR 400 via line 302.  On the other hand, the space switchover data OPB, ISM, OPM1 and OPM2 is kept unchanged to hold the value "0", "#0", "#0", "#0". The selector 440 selects, in response to the data access timing signal on line 318, the DAR 400. The selector 500 selects, in response to the timing signal and dependent on the designation bit OPB of "0", the LS number OPM1 within the RCR 480. The conversion unit 600 converts the LS number OPM1 and the data address which are respectively fed via lines 502 and 442 into a physical address for the region P32 or P34 within the MM 100, thereby the desired data being accessed.

In this manner, the instruction or data within the OS can be accessed irrespective of whether they are for the unmodified portion OS1 or for the modified portion OS2.

(iv) Reference to the other Space Data by the OS

As shown in Fig. 3a, the modified portion OS2 includes execution (block 114) of TTOP2 and USOP2 instructions following the initialization (block 112). These instructions are added in the modified portion OS2 to materialize the present invention. The unmodified portion OS1 does not include these instructions. The OS with a logical space exclusively used therefor employs these instructions for the sake of referring to data of the other spaces. A procedure for referring to the other space data by these instructions will be described by taking a case, for example, wherein the modified portion OS2 refers to data in the region L47

- 13 -

of the logical space 40, i.e., data in the region P47 of the MM 100.

When a TTOP2 instruction is read out from the regoin P34 of the MM 100 to the instruction register 200, the value of the LS number OPM2 is altered under the control of the control circuit 360.  In particular, the LS number designated by the TTOP2 instruction, that is, "#i" in this example is set in the OPM2 field of the RCR 480 via line 314.  Subsequent to the TTOP2 instruction, a USOP2 instruction is read out from the MM 100. The control circuit 360 responds to the USOP2 instruction to set the designation bit OPB to "1" through line 310. The space switchover data now has a value as shown at 124 in Fig. 3b.  When a data access instruction is derived from the modified portion OS2 following the USOP2 instruction, the selector 500 selects, responsive to the data access timing signal fed from the circuit 360 via line 318 and dependent on the designation bit OPB of "1", the LS number OPM2 and produces an output of "#i".  On the other hand, the I unit 300 decides a data address designated by the data access instruction and sets the data address into the DAR 400 via line 302. The selector 440 responds to the data access timing signal on line 318 to select the DAR 400, thereby a data address being produced.  Outputs of the selectors 440 and 500 are converted by the address conversion unit 600 into a physical address for the region P47 of the MM 100, thereby the desired data being accessed.  At the termination of accessing the data in the logical space 40, the modified portion OS2 executes a DROP2 instruction as shown at block 116 in Fig. 3a in order that data in the space 30 exclusively used for the OS is again accessed.

The DROP2 instruction is new one and it is not included in the unmodified region OS1. In response to this instruction, the control circuit 360 of the I unit 300 alters the designation bit OPB to "0". As a result, the space switchover data has a value as shown at 126 in Fig. 3b. Since the designation bit OPB is "0", the subsequent data accessing accompanied by the execution of instructions within the OS is carried out by using the LS number OPM1. In this example, since the LS number OPM1 is "#0", data within the OS space is accessed. And, instructions are accessed by using the LS number ISM. In this example, since the LS number ISM is "#0", instructions are accessed within the OS logical space 30. Thus, within the OS logical space 30, instructions and data are again accessed.

As described above, when the OS refers to the other space data and when the reference is terminated, there is no need of saving and restoring the LS number previously used, thereby simplifying the switchover of the LS numbers and reducing the time for the switchover.

(V) Starting Task Program by the OS

The modified portion OS2 executes an LD instruction and an LDPSW instruction so as to start a task program in the other logical spaces than the OS logical space (block 118 in Fig. 3a). A task control table for the task program to be started is read out by the LD instruction and stored in a predetermined area of the MM 100. Only a PSW is then read out from the predetermined area by the LDPSW instruction and set into the PC 420, STR 460 and RCR 480 via the E unit 700 and line 704. A data to be set in the PC 420 is a logical address for the heading instruction of the task program to be started. A data to be set in the STR 460 has "0" in its OPB bit field. A data to be set in the RCR 480 has in each of the fields of LS number ISM, OPM1 and OPM2, an LS number for the task program to be started.

When the LD instruction is sent from the MM 100 to the instruction register 200, the I unit 300 responds to a data address field in this instruction to decide the heading address of the task control table to be read out and sets this address into the DAR 400. The control circuit 360 then sends the data access timing signal to the selector 440 via line 318 and the selector 440 selects the DAR 400 from which the heading address is delivered. Depending on the designation bit OPB of "0" and responsive to the signal on line 318, the selector 500 on the other hand selects the LS number OPM1 to produce an output of "#0". The address conversion unit 600 then produces, in response to the LS number of "#0" and the heading address, a physical address for the heading address. Based on this physical address, the desired task control table within the OS is read out.

- 16 -

This task control table includes a logical address for the heading instruction of the corresponding task program, an LS number corresponding to the task program, and other data to be stored in the STR 460 and RCR 480. These data in the task control table are sequentially read out and stored in a predetermined area of the MM 100. Thereafter, the data stored in the predetermined area are read out by the LDPSW instruction. More particularly, the logical address for the heading instruction of the task program to be started is set into the PC 420, the status data having the designation bit OPB of "0" is set into the STR 460, and the relocation data having three fields ISM, OPM1 and OPM2 all representative of the LS number corresponding to the task program is set in the RCR 480. When the OS starts, for example, a task program within the region L59 of the logical space 50, the logical space number is "#j" and hence the space switchover data has a value as shown at 128 in Fig. 3b after completion of the execution of the instructions mentioned above.

Responsive to the instruction access timing signal on line 316, the selectors 440 and 500 select the PC 420 and the LS number ISM, respectively. Based on the heading instruction address and the LS number of "#j" fed from these selectors, the address conversion unit 600 produces a heading physical address of the desired task program within the region P59 of the MM 100 corresponding to the region L59. In this manner, the heading instruction of the task program is read out from the MM 100 and the execution of this task program is initiated. When it is desired to access data within the logical space 50 during execution of this task program, a logical address for the data is set into the DAR 400 by means of the I unit 300. The selector 440 responds to the data access timing signal on line 318 to select the DAR 400. Responsive to the timing signal and the designation bit OPB of "0", the selector 500 selects the LS number OPM1 and produces an output of "#j". Thereafter, the address conversion unit 600 operates and a data corresponding to that within the logical space 50 is read out from the MM 100.

(vi)  Communication with the OS by Task Program

Let us consider communication of the thus started task program with the OS in which the task program requests the OS to transfer input/output data or to start another task program. Upon such a communication, the task program executes an SVC instruction (block 120 in Fig. 3a).

When the SVC instruction is executed under the control of the I unit 300, the designation bit OPB and the LS numbers ISM, OPM1 and OPM2 are saved into a predetermined register (not shown) in the E unit 700 via line 490 under the control of a microinstruction. Thereafter, the designation bit OPB in the STR 460 is set to "0" and the LS numbers ISM, OPM1 and OPM2 in the RCR 480 are all set to "#0". This setting is carried out by the corresponding data which are fed onto lines 310, 308, 312 and 314 from the control circuit 360 in response to the microinstruction. Accordingly, the space switchover data has a value as shown àt 129 in Fig. 3b after completion of this processing. The SVC instruction contains the number of a program which carries out the processing to be requested to the OS. When this instruction is executed under the control of the I unit 300, an address for a jump table corresponding to this number is decided and based on this address, the jump table is read out from the MM 100. The jump table includes a heading address of the program for the processing in question. When the jump table is read out from the MM 100, the heading address is transferred from the MM 100 to the PC 420. The heading address is also stored in a predetermined register (not shown) of the E unit. Thereafter, the LS numbers OPM1 and OPM2 within the RCR 480 are modified during the execution of the aforementioned instruction as follows. In the execution of the instruction, the fence address between the regions L32 and L34 in Fig. 2 is read out from a predetermined region of the OS area within the MM 100, and it is fed to the E unit 700 to be compared thereat with the aforementioned heading address. A result of the comparison is fed from the E unit to the control circuit 360 via line 702.

When receiving via line 702 a signal which indicates that the heading address is larger than the fence address, the circuit 360 activates a microinstruction routine which transfers the data of "#j" of the OPM1 field in the data of RCR 480, which has been saved in the E unit 700, to the OPM2 field of the RCR 480 via line 704. As a result, the space switchover data has a value as shown at 130 in Fig. 3b.

The heading address becomes larger than the fence address when the task program activates the modified portion OS2 within the region L34 as shown in Fig. 2. In this example, since the designation bit OPB is "0" and both the LS numbers ISM and OPM1 are "#0", the instruction and data are accessed within the space of "#0" during the execution of the processing that the task program requests. In this manner, the modified portion OS2 is ready for starting. When the desired program in the OS2 thus started requires, in the course of its execution, a data in the same logical space as the task program requesting the communication, the USOP2 instruction as has been explained is issued to change the OPB bit to "1" so that the LS number OPM2 becomes available. Accordingly, data within the logical space of "#j" of the OPM2 can be accessed. Also, when the program within the OS2 requires data within the other logical spaces, two instructions of TTOP2 and USOP2 may be used as has been described in "(iv) Reference to the Other Space Data by the OS".

When receiving via line 702 a signal which indicates that the heading address is smaller than the fence address, the circuit 360 activates a microinstruction routine which transfers the data of "#j" of the OPM1 field in the data of RCR 480, which has been saved in the E unit 700, to the OPM1 and OPM2 fields of the RCR 480 via line 704. As a result, the space switchover data has a value as shown at 132 in Fig. 3b.

The heading address becomes smaller than the fence address when the task program activates the unmodified portion OS1 within the region L32 as shown in Fig. 2. In this example, the instruction within the OS2 is accessed through the region L32 within the logical space 30 which is exclusively used for the OS since the LS number ISM is "#0" whereas the data within the OS2 is accessed through the region L52 within the logical space 50 since the designation bit OPB is "0" and the LS number OPM1 is "#j". Even when it is desired that during the execution of the unmodified portion OS1, the OS1 access a data within the logical space 50 for the task program which requests the communication with the OS, such an accessing is possible within the logical space 50 since the designation bit OPB is "0" and the LS number OPM1 is "#j". In other words, although the OS1 has no specific instructions for altering the space switchover data, the data within the logical space for the task program may be accessed by the OS1 if the space switchover data has previously been set by the SVC instruction. Also, with the OS having the unmodified portion OS1, it is possible to readily switch over the LS numbers which are different for the instruction accessing and for the data accessing since an LS number used for the instruction accessing and that for the data accessing are respectively stored in different fields within the RCR 480. It is also possible in a similar manner to restore the data having passed through the processing into the logical space for the task program requesting the communication, by using the OPM1 or OPM2 field. Subsequently, in order to return the controlling to the original task program which requests the communication, the space switchover data saved in the E unit 700 is stored into predetermined fields of the STR 460 and RCR 480 under the control of the control circuit 360 which responds to a microinstruction.

(vii)  Interruption Processing

The OS processes an interruption which is issued during the execution of the programs. In particular, when the request for an interruption is issued during the execution of the task program, there needs a processing for taking over the processing from the task program under execution to the OS. Such an interruption can be processed as will be described below.

When receiving an interruption signal INT via a line 900, the I unit 300 responds to the interruption signal to carry out the following processing under the control of a microinstruction. Contents of the PC 420, STR 460 and RCR 480 are first saved in a predetermined register (not shown) in the E unit 700 via line 490.

All the bits in the RCR 480 are then set to "0". Thereafter, a data corresponding to the level of the interruption is taken out of a predetermined position in the MM 100 and set into a field of the STR 460 other than the OPB bit field. Next, a heading address of one of a plurality of jump tables each corresponding to respective factors of the interruption is issued and set into the DAR 400. Subsequently, in a similar way as that explained in (iii) and (iv) above, an interruption processing routine is started. When the interruption processing has been completed, the contents of the PC 420, STR 460 and RCR 480 saves in the E unit 700 are again stored into these registers, and the execution of the task program which has been ceased temporarily is restarted. The value of the space switchover data as shown at 128 in Fig. 3b during the task program processing is changed to a value as shown at 134 in response to the request for the interruption (block 121), and thereafter further altered if necessary during the interruption processing and finally returned to the initial value at 128.

(c) Operation (for an OS without Unmodified Portion)

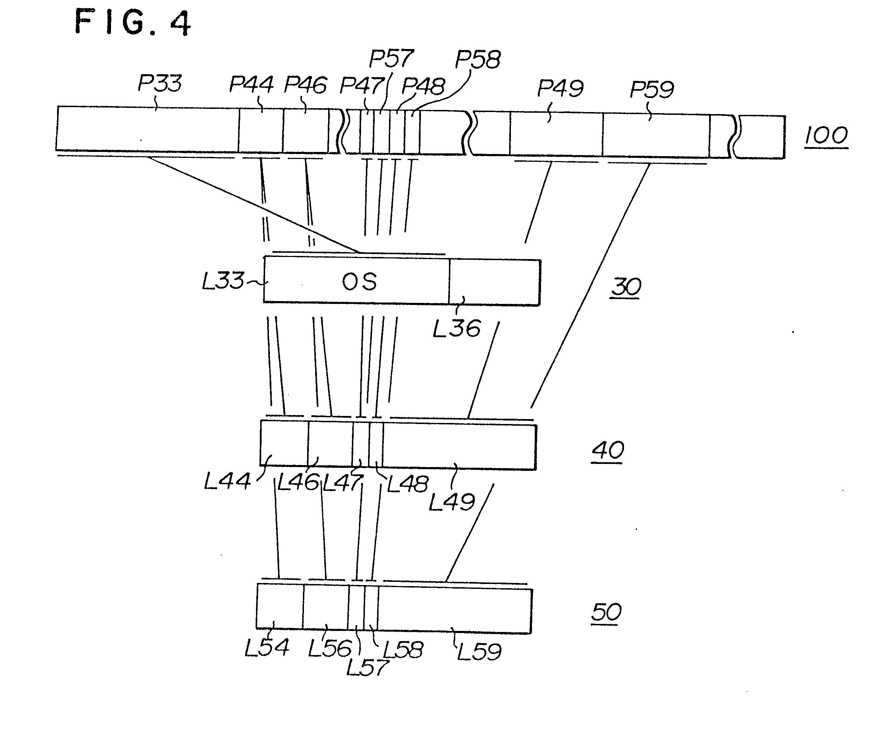

The correspondence between regions in logical spaces and regions in the main memory as shown in Fig. 4 is for use in an OS without an unmodified portion which is fully modified so as to have a logical space 30 which is exclusively used therefor, the OS being used in the computer as shown in Fig. 1. In Fig. 4, the same parts as those in Fig. 2 are designated by the same reference numerals. In Fig. 4, regions L42 and L52 for the OS1, unmodified portion, as in Fig. 2 are not provided. It is also to be noted that an OS within a logical space 30 shown in Fig. 4 has only one region L33 and is not divided into two regions L32 and L34 in contrast to Fig. 2. Accordingly, in Fig. 4, an MM 100 has a single region P33 for the OS and is not divided into two regions P32 and P34 is contrast to Fig. 2. When neglecting the capacity, the remaining regions L44, L46 to L49, L54, L56 to L59, P44, P46 to P49, P57 to P59 as designated by the same numbers as those in Fig. 2 are used and arranged in the same manner as in Fig. 2. In brevity, the arrangement of the regions in Fig. 4 is such that the region for the unmodified portion OS1 in Fig. 2 is eliminated or the fence address is "0".

Accordingly, the previous explanation in "(b) Operation" is directly applicable to the computer of Fig. 1 operating with the logical spaces of the arrangement as shown in Fig. 4. However, it never occurs that the heading address is smaller than the fence address as described in "(b) (vi) Communication with the OS by Task Program", and hence the space switchover data never has the value as shown at 132 in Fig. 3b. When the above difference in operation is neglected, the computer of Fig. 1 itself is operable with the OS without the unmodified portion as shown in Fig. 4.

(d)  Other Embodiments

As described above, with the OS without the unmodified portion, the LS number ISM always coincides with the LS number OPM1, excluding the arrangement 132 in Fig. 3b. It is therefore unnecessary to store the fence address in the OS. It is also possible to eliminate the microinstruction used for comparison of the fence address with the heading address and the microinstruction used for the processing following the comparison result wherein the heading address is smaller than the fence address. Furthermore, the ISM field and the OPM1 field within the RCR 480 may be made a common field. In this case, the control circuit 360 modifies the common field as desired, and the selector 500 is so altered as to respond to the instruction access timing signal on line 316, thereby selecting the common field and to respond to the signal on line 318 and the designation bit OPB, thereby selecting the common field when the bit OPB is "0" and the OPM2 field when the bit OPB is "1".

As has been described, the present invention comprises two logical space numbers used when accessing data, to reduce the frequency of processings for saving the previously used logical space and of processings for restoring the saved logical space number when switching over the logical space, thereby reducing the time for the above processings and improving the processing performance of the computer.

- 1 -

WHAT WE CLAIM IS:

1.      A data processing system comprising:

main memory means (100) for storing machine instructions and data;

logical space number storage means (480) and logical address storage means (400) for respectively storing logical space numbers and logical addresses, said logical space numbers and logical addresses being used to specify machine instructions or data to be accessed in said main memory means;

address conversion means (600) connected to said logical space number storage means and said logical address storage means to respond to said logical space numbers and logical addresses so as to produce physical addresses, for accessing said main memory means based on said physical addresses; and

means (300) connected to said main memory means to respond to machine instructions read out from said main memory means, for controlling execution of the read out machine instructions,

wherein said logical space number storage means (480) comprises first to third logical space number storage means (ISM, OPM1, OPM2), and means (500) for selecting the first logical space number storage means when the machine instructions are accessed in said main memory means and selecting either one of the second and third logical space number storage means when the data are accessed in said main memory means.

2.      A data processing system according to Claim 1
wherein said instruction execution controlling means (300)
comprises means for delivering a first signal which
instructs said main memory means of a timing for access
to the machine instructions therein, and means for
delivering a second signal which instructs said main
memory means of a timing for access of the data therein,
and wherein said instruction execution controlling means
(300) comprises means (460) responsive to the instructions
read out from said main memory means, for delivering a
third signal which instructs the selection of either one
of said second and third logical space number storage
means, and wherein said selecting means (500) responds
to said first signal to select said first logical space
number storage means and to said second and third signals
to select either one of said second and third logical
space storage means.

3.      A data processing system according to Claim 2
wherein said third signal delivering means comprises
means responsive to a predetermined machine instruction
for producing the third signal, means for storing said
third signal, and means for delivering contents of said
storing means.

4.      A data processing system according to Claim 1
wherein said first and second logical space number storage
means comprise common storage means, and wherein said
selecting means selects the common storage means when
the machine instructions are accessed in said main memory

- 3 -

means and selects either one of said common storage means and said third logical space number storage means when the data are accessed in said main memory means.

5.        A data processing system according to Claim 4 wherein said instruction execution controlling means (300) comprises means for delivering a first signal which instructs said main memory means of a timing for access of the machine instructions therein, and means for delivering a second·signal which instructs said main memory means of a timing for access of the data therein, and wherein said instruction execution controlling means comprises means responsive to the instructions read out from said main memory means, for delivering a third signal which instructs the selection of either one of said common storage means and said third logical space number storage means, and wherein said selecting means responds to said first signal to select said common storage means and to said second and third signals to select either one of said common storage means and said third logical space number storage means.

6.        A data processing system according to Claim 5 wherein said third signal delivering means (460) comprises means responsive to a predetermined machine instruction for producing the third signal, means for storing said third signal, and means for delivering contents of said storing means.

# FIG. 1

SWON INT

INSTRUCTION REGISTER ~200

INSTRUCTION UNIT

CONTROL STORAGE ~320

CONTROL REGISTER ~340

360~ CONTROL

~300

MAIN MEMORY ~100

EXECUTION UNIT 700

702

704

DATA ADDRESS REGISTER 400

PROGRAM COUNTER 420

OPB ~460

ISM OPM1 OPM2

480

SELECTOR 440

SELECTOR ~500

CONVERSION ~600

502

490

FIG.2

# FIG. 3a

| | |
|---|---|
| INITIALIZATION | ~112 |
| TTOP2 INSTRUCTION / USOP2 INSTRUCTION EXECUTION | ~114 |
| DROP2 INSTRUCTION EXECUTION | ~116 |
| LD INSTRUCTION / LDPSW INSTRUCTION EXECUTION | ~118 |
| SVC INSTRUCTION EXECUTION | ~120 |
| INTERRUPTION | ~121 |

# FIG. 3b

OPB ‖ ISM | OPM1 | OPM2 ~110

| O ‖ #O | #O | #O | ~122 |
| 1 ‖ #O | #O | #i | ~124 |
| O ‖ #O | #O | #i | ~126 |
| O ‖ #j | #j | #j | ~128 |
| O ‖ #O | #O | #O | ~129 |
| O ‖ #O | #O | #j | ~130    O ‖ #O | #j | #j | ~132 |
| O ‖ #O | #O | #O | ~134 |

3/4

CC16586

# FIG. 4

## EUROPEAN SEARCH REPORT

European Patent Office

Application number

EP 80 30 0679

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| X | US - A - 3 504 349 (I.B.M.)<br>* Column 9, line 17 - column 10, line 14; column 11, lines 64-73; column 16, lines 39-44; column 17, lines 30-46; figures 1,3 * | 1,2,4,5 | G 06 F 13/00 9/46 |
| | FR - A - 1 580 604 (I.B.M.)<br>& GB - A - 1 234 431 | 3,6 | |
| | US - A - 4 037 215 (I.B.M.)<br>* Column 9, line 25 - column 11, line 24; figure 1 * | 1-6 | TECHNICAL FIELDS SEARCHED (Int.Cl.³)<br><br>G 06 F 13/00 |
| | US - A - 4 037 214 (I.B.M.)<br>* Abstract; figure 1 * | 1-6 | |
| A | COMPUTER, vol. 7, no. 11, November 1974, pages 24-38<br>Long Beach, U.S.A.<br>I. FLORES: "Lookahead control in the IBM system 370 model 165"<br>* Page 27 * | | |
| A | COMPUTER DESIGN, vol. 12, no. 12, December 1973, pages 75-81<br>Concord<br>K.J. HAMER HODGES: "A fault-tolerant multiprocessor design for real-time control"<br>* Page 78 * | 1,5 | CATEGORY OF CITED DOCUMENTS<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | The present search report has been drawn up for all claims | | &: member of the same patent family. corresponding document |

| Place of search | Date of completion of the search | Examiner |
|---|---|---|
| The Hague | 20-06-1980 | KRIER |

EPO Form 1503.1 06.78